# EUROPEAN PATENT SPECIFICATION

(11) **EP 3 050 398 B1**
(45) Date of publication and mention of the grant of the patent: **20.09.2017**
(21) Application number: 13766990.9
(22) Date of filing: 27.09.2013
(51) Int. Cl.: H05B 6/06, H05B 6/12

(54) **SYNCHRONIZATION CIRCUIT FOR POWERING COOKTOP DUAL INDUCTION COIL HEATING ZONE**
SYNCHRONISATIONSSCHALTUNG ZUR SPEISUNG DER DUALINDUKTIONSSPULENHEIZZONE EINES KOCHFELDES
CIRCUIT DE SYNCHRONISATION POUR L'ALIMENTATION D'UNE ZONE DE CHAUFFAGE À DOUBLE BOBINE D'INDUCTION DE PLAQUE DE CUISSON

(43) Date of publication of application: 03.08.2016
(73) Proprietor: Arçelik Anonim Sirketi, 34950 Istanbul (TR)
(72) Inventor: ULGUR, Ibrahim Niyazi, 34950 Istanbul (TR); YILMAZ, Namik, 34950 Istanbul (TR); YARDIBI, Hakan Suleyman, 34950 Istanbul (TR); OZTURK, Metin, 34950 Istanbul (TR)
(86) International application number: PCT/EP2013/070201
(87) International publication number: WO 2015/043650

(56) References cited:
- EP-A2- 2 170 010
- US-A1- 2011 253 706

## Description

The present invention relates to a synchronization circuit powering a cooktop heating zone having double induction coils.

It is well-known that the induction heating cooker operates based on the process of heating a ferromagnetic material by electromagnetic induction where eddy currents are to be induced and resistance provides heat dissipation within said ferromagnetic material, i.e. a cooking vessel in the form of a pot or pan.

By induction heating, high-frequency alternating current is passed through a coil upon which a magnetic field of the same frequency is induced. The internal resistance of the pan causes heat dissipation due to Joule effect and energy transfer is interrupted once the pan is removed from the cooktop. The energy efficiency of induction heating cookers is considerably high since there is no transfer of heat energy between the hob and the cookware and heat energy lost in the air is minimal.

A resonant converter in an induction heater circuit topology typically consists of a capacitor, an inductor and resistance. When power is supplied to the resonant tank, electric energy is stored in the inductor and transferred to the capacitor. Resonance therefore occurs while the inductor and the capacitor involve in energy exchange. The resonant converter can be a half-bridge series resonant converter or a quasi-resonant converter.

A quasi-resonant converter exhibits certain advantages over a half-bridge series resonant converter especially due to its simpler circuit design having only one power switching device compared to the half-bridge series resonant converter whose overall operation is more complex. In order to drive the resonant inductor generating magnetic field and in turn inducing eddy currents on the skin depth of a cooking vessel, a high-frequency power switch such as an IGBT is accordingly used.

A heating zone having more than one induction coil such that the inner coil is encircled by the outer coil is known. Among others, WO 2010 037675 discloses such a heating zone with two distinct induction coils combined into a heating zone with concentrically disposed induction coils. WO 2010 037675 discloses a system in which heating elements are controlled individually, independent of each other.

EP 2 170 010 A2 and US 2011/0253796 A1 each show an induction heating cooktop in accordance with the preamble of claim 1.

The present invention, on the other hand, provides a simpler and cheaper circuit solution by which a single microcontroller in a power circuit is used to drive high-frequency switching elements so as to supply the two inductions coils. The expected problem of synchronization as power supply to the two induction coils in a non-synchronized manner result in that the respective magnetic fields cancel each other out is solved by the present invention in a much cheaper manner as the circuit solution of the invention requires no special high-cost microcontroller generating multiple phased PWM gate drive signals for triggering high-frequency elements.

The present invention provides an induction heating cooktop having an improved and advantageously cost-efficient power circuit for simultaneously powering two concentrically disposed induction coils as provided by the characterizing features defined in Claim 1.

Primary object of the present invention is to provide a cost-efficient power circuit for simultaneously powering two concentrically disposed induction coils of an induction heating cooktop.

The present invention proposes an induction heating cooktop with a double-coil heater with two induction coils, one of which enclosing the other. A power circuit comprises respective inner and outer ring IGBTs and gate drive circuits connected to two output pins of a microcontroller. Said gate drive circuits are configured to drive the IGBTs in a logic low state .

The two output pins of the microcontroller are connected through a diode such that the inner and outer ring induction coils are powered in a synchronous manner when said diode is forward-biased. In this case, the outer ring output pin of the microcontroller is switched to the high-impedance mode.

Accompanying drawings are given solely for the purpose of exemplifying a circuit whose advantages over prior art were outlined above and will be explained in brief hereinafter.

The drawings are not meant to delimit the scope of protection as identified in the claims nor should they be referred to alone in an effort to interpret the scope identified in said claims without recourse to the technical disclosure in the description of the present invention.

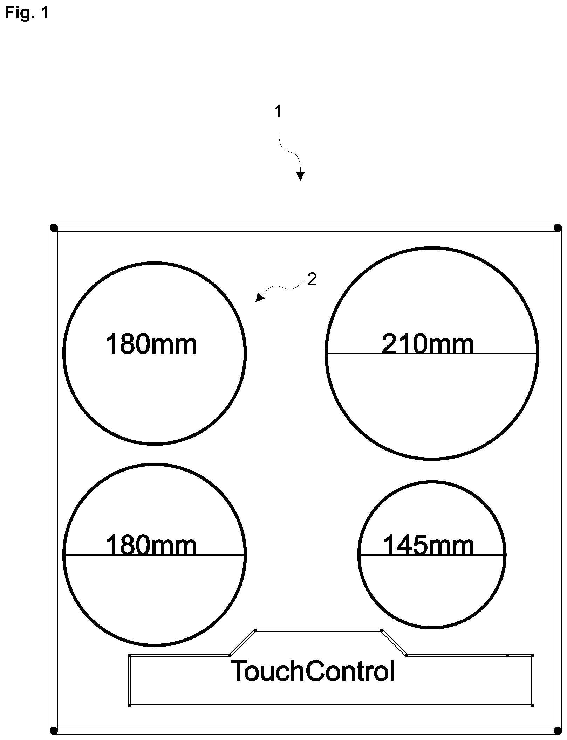

Fig. 1 demonstrates a general representation of a cooktop with a plurality of heaters.

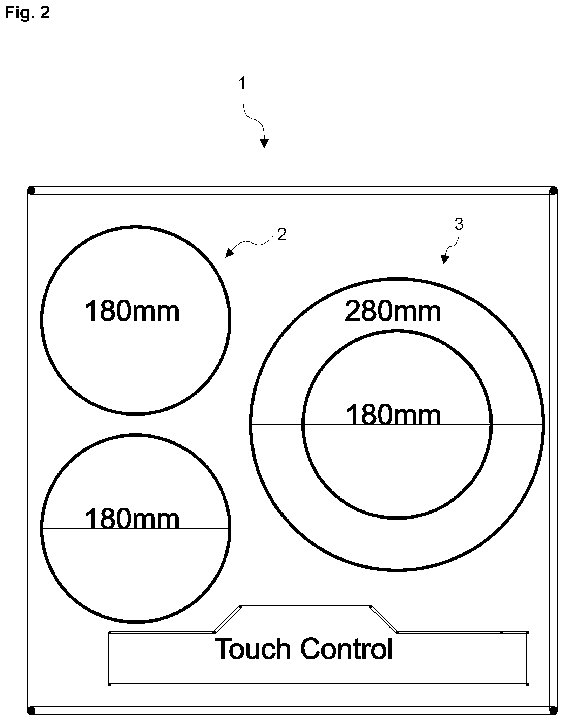

Fig. 2 demonstrates a general representation of a cooktop with a plurality of heaters, two of which being concentrically disposed according to the present invention.
Fig. 3 demonstrates the circuit diagram of the power circuit of the cooktop double-coil heater according to the present invention.
Fig. 4 demonstrates the waveforms of the inner and outer ring switching elements PWM signals depending on the size of the cooking container according to the present invention.

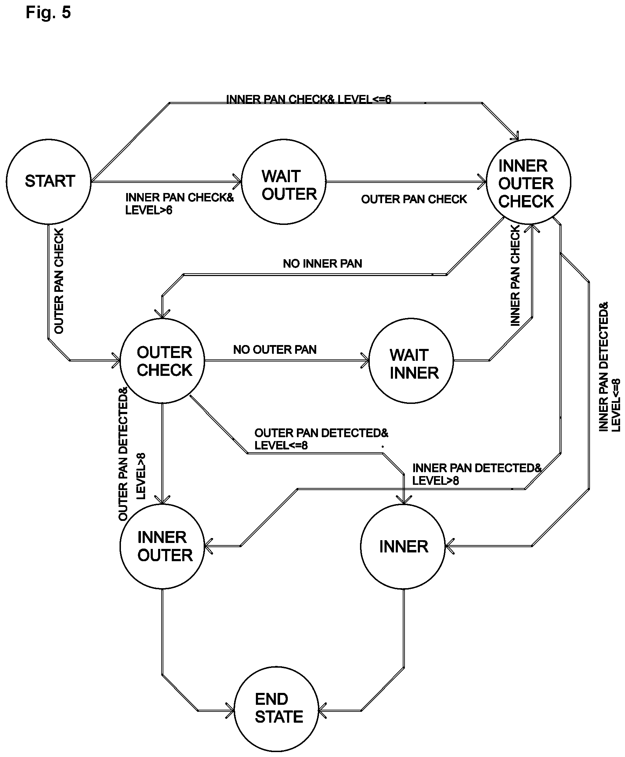

Fig. 5 demonstrates the main algorithm of the powering procedure according to the present invention.

The following numerals are used in the detailed description:
1. induction heating cooktop
2. Cooktop heater
3. Double-coil heater
4. Power circuit
5. Filter inductance
6. Leveling capacitor
7. Inner ring switching device
8. Outer ring switching device
9. Inner ring induction coil
10. Outer ring induction coil
11. Resonant capacitor
12. Rectifier
13. Synchronization circuit
14. Microcontroller

The present invention proposes an induction heating cooktop (1) typically having a plurality of individual heaters (2) with induction coils. The induction heating cooktop (1) of the invention comprises at least one double-coil heater (3) having two induction coils in the form of an inner and outer ring induction coils (respectively 9 and 10) to provide an increased power output. An increased power output is provided by way of synchronously supplying power to the two individual coils in order for avoiding the interference of the two magnetic fields. A power circuit (4) by which heat energy is induced within a magnetically responsive cooking container in this respect is proposed as will be delineated hereinafter.

The induction heating cooktop (1) of the present invention is supplied with a source of AC voltage. A full-wave bridge rectifier (12) is connected between the AC source and respective filter circuits (F1, F2) of said inner and outer ring induction coils (9, 10). The two filter circuits (F1, F2) typically comprise levelling capacitors (6) and filter inductances (5) at the output of said full-wave rectifier (12).

Said inner and outer ring induction coils (9, 10) are connected between the output of said rectifier (12) and respective switching devices in the form of inner and outer ring switching devices (respectively 7 and 8). A resonant capacitor (11) is disposed in parallel to each of said inner and outer ring induction coils (9, 10). The inner and outer switching devices (7, 8) are conventionally connected parallel to anti-parallel diodes, i.e. freewheeling diodes.

The AC signal filter circuits (F1, F2) of the power circuit (4) conventionally provides that power passing through the levelling capacitor (6) serves to the purpose of filtering high frequency current. The voltage of said levelling capacitors (6) is converted into a square wave by inner and outer switching devices (7, 8). According to Ampere's Law, the square wave provides resonance creating a magnetic field around the inner and outer ring induction coils (9, 10). The resonant capacitors (11) in parallel therefore compensate the inductive nature of the latter.

The inner and outer ring switching devices (7, 8) are insulated gate bipolar transistors (IGBT). The operating principle of the quasi-resonant topology typically relies on the storage of energy in the inner and outer ring induction coils (9, 10) when the inner and outer ring switching devices (7, 8) are turned on, and transfer of energy from said induction coils to a cooking pot or pan (P) when said power switching devices are turned off. More particularly, when a respective switching device is turned off, the resonant voltage (that is the collector voltage of the IGBT) increases on the collector node as the respective resonant capacitor (11) is being discharged. When the resonant voltage is equal to the rectified output voltage at the input node, the energy stored in the respective induction coil begins to be transferred to the resonant capacitor (11). The resonant current gradually decreases to zero when the resonant voltage reaches its maximum, meaning that energy transfer from the respective inner and outer ring induction coil (9, 10) to the respective resonant capacitor (11) is terminated. Thereupon, the resonant capacitor (11) starts discharging the energy to the respective induction coil. The current completes its cycle by passing through the freewheeling diode connected in parallel to the IGBT. The freewheeling diode is typically forward-biased when the collector voltage of the IGBT, i.e. the resonant voltage becomes negative.

The present invention proposes an induction heating cooktop (1) with at least one double-coil heater (3) having concentrically disposed induction coils in the form of an inner and outer ring induction coils (9, 10) and a power circuit (4) for powering said double-coil heater (3), said power circuit (4) comprising a rectifier (12) rectifying the alternative signal, a filter circuit (F1, F2) and an inverter stage (S1, S2) associated with said inner and outer ring induction coils (9, 10), each filter circuit (F1, F2) comprising a filter inductance (5) and a leveling capacitor (6) and each inverter stage (S1, S2) comprising a respective resonant capacitor (11) disposed in parallel with said inner and outer ring induction coils (9, 10) and respective inner and outer switching devices (7, 8) in parallel with a reverse-biased freewheeling diode.

Said power circuit (4) further comprises a microcontroller (14) regulating the operation of said inner and outer switching devices (7, 8) by triggering respective gate drive circuits (G1, G2). The microcontroller (14) according to the present invention has a first and a second output pin to generate PWM signals to drive the IGBT gate drive circuits (G1, G2). The microcontroller (14) triggers the IGBTs' drive circuits with PWM signals at the proper time with the correct voltage amplitudes and frequencies as required by the power level setting of the associated inner or outer ring induction coil (9, 10).

According to the present invention, the microcontroller (14) only triggers the drive circuit of the inner ring switching device (7) in case a pan (P) with a diameter shorter than 240 mm is sensed by a cooking utensil sensing circuit (not shown). In the event that a larger pan (P) is detected, the outer ring switching device (8) is also triggered provided that the power level is set to a level that is greater than a predefined one.

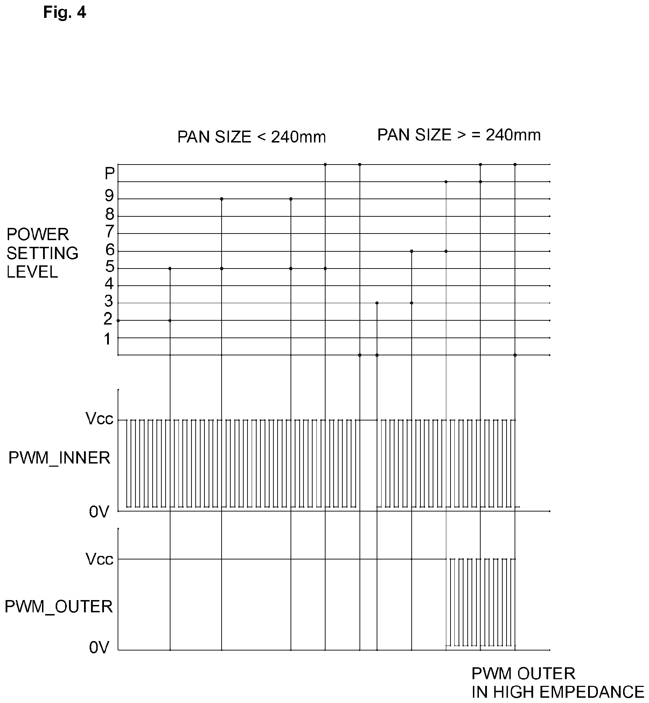

Now referring to Fig. 4, if a smaller pan (P) is detected, the outer ring switching device (8) is not turned on even if the power level is set to a level above a predefined level. In this case, as shown in Fig. 4, the outer ring control signal is 5V, that is, the outer ring switching device (8) is not triggered but the inner ring switching device (7) is turned on and off by PWM switching with an output of 0V. Therefore, according to the invention, an output pin of the microcontroller (14) is set low (0V) when driving a respective inner or outer ring switching device (7, 8) and is pulled to 5V in the contrary case. This advantageously provides synchronization of the two PWM signals in the event that both switching device (7, 8) are triggered as will be explained below. Therefore, said inner and outer ring switching devices (7, 8) are simultaneously turned on and off by PWM switching only if a larger pan (P) is detected and power level is greater than a predetermined threshold. Otherwise, they are not operated simultaneously but individually again based on the power level setting and pan (P) size.

The invention employs a regular generic microcontroller such that an improved circuit is obtained without involving a special high-cost microcontroller that can generate multiple phased PWM gate drive signals for triggering high-frequency elements. To this end, two outputs of the microcontroller (14) are connected through a diode (D5), which is forward-biased only when the outer ring PWM pin of the microcontroller (14) is in high-impedance mode. The latter pin is then turned into an input pin while a pull-up resistor (R1) typically functions to limit the amount of current that can flow through. In this case, the two PWM signals at the inner and outer ring pins of the microcontroller (14) become synchronized such that the inner ring PWM signal is synchronously carried to the drive circuit of the outer ring switching device (8). Therefore, powering of the two induction coils (9, 10) in a synchronous manner is achieved due the fact that the IGBT drive circuits are configured to trigger the IGBTs while the microcontroller's (14) inner ring PWM pin remain in a low logic state and the outer ring PWM pin is switched to the high-impedance mode.

In a nutshell, an induction heating cooktop (1) with at least one double-coil heater (3) having concentrically disposed induction coils in the form of inner and outer ring induction coils (9, 10) and a power circuit (4) for powering said double-coil heater (3) is proposed. Inner and outer ring switching devices (7, 8) are triggered by a respective gate drive circuit (G1, G2) in electrical communication with two output pins of a microcontroller (14). Said gate drive circuits (G1, G2) of the inner and outer ring switching devices (7, 8) are configured to trigger the same while the microcontroller's (14) respective output pins remain in a low logic state.

The two output pins of the microcontroller (14) are connected through a diode (D5) such that said inner and outer ring induction coils (9, 10) are simultaneously powered only when said diode (D5) is forward-biased in response to the transition of the output pin of the microcontroller (14) associated with said outer ring induction coil (10) to the high-impedance mode.

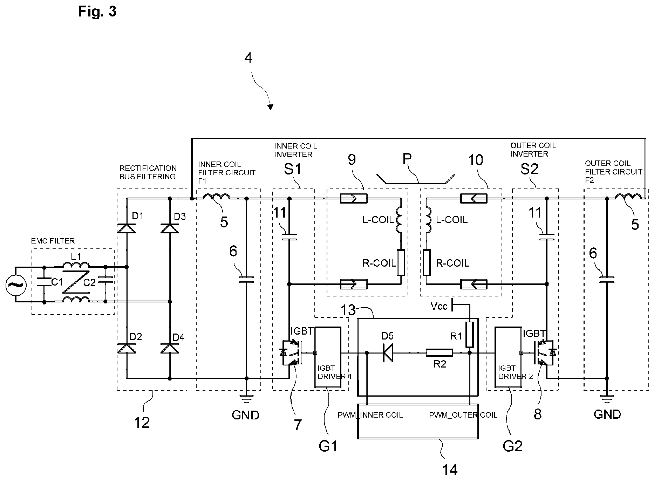

It is to be noted that the synchronization circuit (13) seen in Fig. 3 does not allow independent control of the two switching devices (7, 8) in a simultaneous manner. However, the operational algorithm for powering the double-coil heater (3) of the invention advantageously provides that both coils of the double-coil heater (3) are powered only if the presence of a larger pan (P) (diameter > 240mm) is detected in the same time with a high power level setting. To this end, the invention's algorithm advantageously provides an equally efficient power control enabling gradual power adjustment compared to individual regulation of concentrically disposed coils.

## Claims

1. An induction heating cooktop (1) with at least one double-coil heater (3) having concentrically disposed induction coils in the form of inner and outer ring induction coils (9, 10) and a power circuit (4) for powering said double-coil heater (3), said power circuit (4) comprising a rectifier (12) rectifying the alternative signal, filter circuits (F1, F2) and inverter stages (S1, S2) associated with said inner and outer ring induction coils (9, 10), each inverter stage (S1, S2) comprising a respective inner and outer ring switching devices (7, 8) in parallel with a reverse-biased freewheeling diode, said inner and outer ring switching devices (7, 8) being triggered by a respective gate drive circuit (G1, G2) in electrical communication with two output pins of a microcontroller (14) **characterized in that**
- said gate drive circuits (G1, G2) of the inner and outer ring switching devices (7, 8) are configured to trigger the same while the microcontroller's (14) respective output pins remain in a low logic state,
- the two output pins of the microcontroller (14) are connected through a diode (D5) such that said inner and outer ring induction coils (9, 10) are simultaneously powered only when said diode (D5) is forward-biased in response to the transition of the output pin of the microcontroller (14) associated with the outer ring induction coil (10) to the high-impedance mode,
- the output pin of the microcontroller (14) associated with said outer ring induction coil (10) is connected to a positive supply voltage (Vcc) through a pull-up resistor (R1).

2. An induction heating cooker (1) as in Claim 1, **characterized in that** each of said filter circuits (F1, F2) comprises a filter inductance (5) and a levelling capacitor (6).

3. An induction heating cooker (1) as in Claim 1 or 2, **characterized in that** each of said inverter stages (S1, S2) comprises a resonant capacitor (11) disposed in parallel with said inner and outer ring induction coils (9, 10).

## Patentansprüche

1. Eine induzierte Kochfläche (1) mit mindestens einem Doppelspulenerhitzer (3) mit konzentrisch angeordneten Induktionsspulen in Form von inneren und äußeren ringförmigen Induktionsspulen (9, 10) und einem Leistungskreis (4) für Versorgung des besagten Doppelspulenerhitzers (3), der besagte Leistungskreis (4) besteht aus einem Gleichrichter (12), der das alternative Signal, Filterkreise (F1, F2) und Umkehrstufen (S1, S2) richtig stellt, die mit besagten inneren und äußeren ringförmigen Induktionsspulen (9, 10) verbunden sind, jede Umkehrstufe (S1, S2) besteht aus einem betreffenden inneren und äußeren ringförmigen Induktionsspulen (9, 10) jede Umkehrstufe (S1, S2) besteht aus einem betreffenden inneren und äußeren ringförmigen Schaltapparatur (7, 8) in parallel mit einer Vorspannung gesperrten Freilaufdiode, besagte innere und äußere ringförmige Schaltapparaturen (7, 8) sind angesteuert von einer betreffenden Torantriebschaltung (G1, G2) in elektrischer Kommunikation mit zwei Ausgangsnadeln eines Mikrokontrollers (14),
**dadurch gekennzeichnet, daß**
- besagte Torantriebschaltungen (G1, G2) der inneren und äußeren ringförmigen Schaltapparaturen (7, 8) konfiguriert sind, um dieselben anzusteuern, wenn die betreffenden Ausgangsnadeln des Mikrokontrollers (14) in einem niedrigen logischen Zustand bleibt,
- die zwei Ausgangsnadeln des Mikrokontrollers (14) verbunden sind durch eine Diode (D5), sodaß besagte innere und äußere Induktionsspulen (9, 10) gleichzeitig versorgt sind, nur dann, wenn besagte Diode (D5) mit Flussspannung gesperrt ist gegen die Überleitung vom Ausgangnadel des Mikrokontrollers (14) verbunden mit äußerer ringförmigen Induktionsspule (10) zur einer Mode in Hochimpedanz,
- der Ausgangsnadel des Mikrokontrollers (14), der mit besagter äußerer ringförmigen Induktionsspule (10) verbunden ist, ist zu einer positiven Betriebsspannung (Vcc) durch einen Pull-Up Widerstand (R1) verbunden.

2. Eine induzierte Kochfläche (1) nach Anspruch 1, **dadurch gekennzeichnet, daß** jede der besagten Filterkreisen (F1, F2) aus einem Filterinduktanz (5) und einem ausgleichenden Kondensator (6) besteht.

3. Eine induzierte Kochfläche (1) nach Anspruch 1 oder 2, **dadurch gekennzeichnet, daß** jede der besagten Umkehrstufen (S1, S2) aus einem Resonanzkondensator (11) besteht, die angeordnet sind in parallel mit besagter inneren und äußeren ringförmigen Induktionsspulen (9, 10).

## Revendications

1. Une plaque de cuisson par chauffage à induction (1) avec au moins un chauffage à double bobine (3) comportant des bobines d'induction disposées concentriquement sous la forme de bobines d'induction annulaire intérieure et extérieure (9, 10) et un circuit de puissance (4) pour alimenter ledit chauffage à double bobine (3), ledit circuit de puissance (4) comportant un redresseur (12) rectifiant le signal alternatif, les circuits de filtration (F1, F2) et les étages inverseurs (S1, S2) associés aux dites bobines d'induction annulaire intérieure et extérieure (9, 10), chaque étage inverseur (S1, S2) comprenant des dispositifs respectifs de commutation d'anneau intérieur et extérieur (7, 8) parallèlement à une diode à roue libre polarisée en sens inverse, lesdits dispositifs de commutation d'anneau intérieure et extérieure (7, 8) étant déclenchés par un circuit d'attaque de grille respectif (G1, G2) en communication électrique avec deux broches de sortie d'un microcontrôleur (14) **caractérisé en ce que**
- lesdits circuits d'attaque de grille (G1, G2) des dispositifs de commutation d'anneau intérieur et extérieur (7, 8) sont configurés pour déclencher la même tandis que les broches de sortie respectives du microcontrôleur (14) restent dans un faible état logique,
- les deux broches de sortie du microcontrôleur (14) sont connectées par une diode (D5) de sorte quel es dites bobines d'induction annulaire intérieure et extérieure (9, 10) ne soient alimentées simultanément que lors que ladite diode (D5) est polarisée en direct en réponse à la transition de la broche de sortie du microcontrôleur (14) associée à la bobine d'induction d'anneau extérieure (10) au mode haute impédance,
- la broche de sortie du microcontrôleur (14) associée à ladite bobine d'induction d'anneau extérieure (10) est reliée à une tension d'alimentation positive (Vcc) par une résistance d'excursion haute (R1).

2. Une cuisinière de chauffage à induction (1) selon la revendication 1, **caractérisée en ce que** chacun des dits circuits de filtration (F1, F2) comprend une inductance de filtrage (5) et un condensateur de nivellement (6).

3. Une cuisinière de chauffage à induction (1) selon la revendication 1 ou 2, **caractérisé en ce que** chacun desdits étages inverseurs (S1, S2) comprend un condensateur résonnant (11) disposé en parallèle avec les dites bobines d'induction annulaire intérieure et extérieure (9, 10).
